# EUROPEAN PATENT APPLICATION

(11) **EP 4 718 135 A1**
(43) Date of publication of application: **01.04.2026**
(21) Application number: 24810935.7
(22) Date of filing: 13.05.2024
(51) Int. Cl.: G02B 7/08, G02B 7/04

(54) **LENS DEVICE, CONTROL METHOD, AND IMAGING SYSTEM**

(30) Priority: 22.05.2023 JP 2023083801
(71) Applicant: Sony Group Corporation, Tokyo 108-0075 (JP)
(72) Inventor: KUGO, Daisuke, Tokyo 108-0075 (JP)
(74) Representative: D Young & Co LLP
(86) International application number: PCT/JP2024/017565
(87) International publication number: WO 2024/241928

(57) **Abstract**

A lens device includes a zoom lens; a focus lens; a detection unit that directly detects a position of the zoom lens; and a control unit that maintains a parameter for performing drive control of the focus lens in a case where a movement amount of the zoom lens based on a detection result of the detection unit is less than a predetermined threshold, switches the parameter in a case where the movement amount of the zoom lens is equal to or greater than the threshold, and performs drive control of the focus lens on the basis of the maintained or switched parameter.

## Description

### TECHNICAL FIELD

The present technology relates to a lens device, a control method, and an imaging system, and particularly relates to a technology of drive control of a focus lens.

### BACKGROUND ART

In a lens device provided with a zoom lens and a focus lens, when the zoom lens is moved in an optical axis direction, focusing is lost even if the focus lens is not moved. Therefore, in the lens device, in order to change a magnification of an image while maintaining a focus (in-focus) position, zoom tracking is performed in which the focus lens is moved in accordance with the movement of the zoom lens (for example, Patent Document 1).

### CITATION LIST

### PATENT DOCUMENT

Patent Document 1: Japanese Patent Application Laid-Open No. 2018-124498

### SUMMARY OF THE INVENTION

### PROBLEMS TO BE SOLVED BY THE INVENTION

Meanwhile, in the technology described in Patent Document 1, zoom tracking with high responsiveness to a target is performed on the basis of the movement of the zoom lens. Therefore, even if the zoom lens slightly moves due to mechanical rattling due to a change in posture of the lens device caused by a user moving the lens device or the like, zoom tracking with high responsiveness is performed.

Then, when the zoom tracking with high responsiveness is performed, sound or vibration may occur. Therefore, when the zoom tracking with high responsiveness is performed due to minute movement of the zoom lens not intended by the user, the user feels uncomfortable.

The present technology has been made in view of the above circumstances, and an object thereof is to perform appropriate zoom tracking in accordance with movement of a zoom lens.

### SOLUTIONS TO PROBLEMS

A lens device according to the present technology includes a zoom lens; a focus lens; a detection unit that directly measures a position of the zoom lens; and a control unit that maintains a parameter in a case where a movement amount of the zoom lens based on a measurement result of the detection unit is less than a predetermined threshold, switches the parameter in a case where the movement amount of the zoom lens is equal to or greater than the threshold, and performs drive control of the focus lens on the basis of the maintained or switched parameter.

With this arrangement, the lens device can perform zoom tracking without switching the parameter when the zoom lens has moved slightly due to rattling or the like, and can perform zoom tracking by switching the parameter when the zoom lens has moved to some extent by operation of a zoom ring or the like.

### BRIEF DESCRIPTION OF DRAWINGS

Fig. 1 is a diagram illustrating a configuration of an imaging system according to the present technology.
Fig. 2 is a block diagram illustrating an internal configuration of the imaging system.
Fig. 3 is a diagram for describing a configuration of a zoom lens position detection unit that detects a zoom lens position.
Fig. 4 is a diagram for describing a subject position, a subject distance, a focus position, an in-focus distance, a focus lens position, a zoom lens position, and a focal distance.
Fig. 5 is a diagram for describing a cam curve.
Fig. 6 is a diagram for describing a settling priority mode and a following priority mode.
Fig. 7 is a flowchart illustrating a flow of zoom tracking processing during AF processing.
Fig. 8 is a diagram for describing mode switching when a mode is switched in accordance with movement of a zoom lens as a comparative example.
Fig. 9 is a diagram for describing mode switching when the mode is switched according to whether or not a movement amount of the zoom lens is equal to or greater than a threshold.
Fig. 10 is a diagram for describing mode switching when the mode is switched according to whether or not the movement amount of the zoom lens is equal to or greater than the threshold.
Fig. 11 is a diagram for describing mode switching when the mode is switched according to whether or not the movement amount of the zoom lens is equal to or greater than the threshold.

### MODE FOR CARRYING OUT THE INVENTION

Hereinafter, an embodiment will be described in the following order.
<1. Configuration of Imaging System>
<2. Focus-Related Processing>
<3. Modifications>
<4. Summary of Embodiment>
<5. Present Technology>

### <1. Configuration of Imaging System>

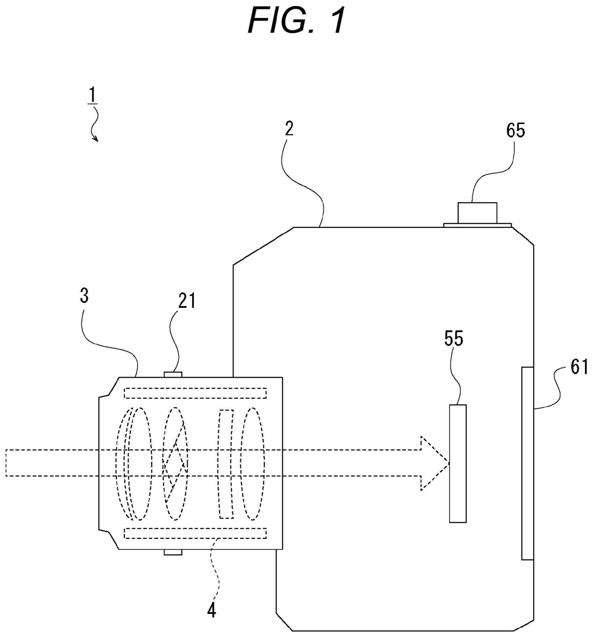

Fig. 1 is a diagram illustrating a configuration of an imaging system 1 according to the present technology.

The imaging system 1 is configured as a digital camera device in which an interchangeable lens 3 is detachably attached to an imaging device (body) 2. The imaging system 1 has not only a function of capturing a still image but also a function of capturing a moving image.

As illustrated in Fig. 1, the imaging system 1 includes an imaging element 55 that captures a subject image incident via the interchangeable lens 3, a display unit 61 capable of displaying a GUI such as a captured image obtained by the imaging element 55 and various operation screens, an operation unit 65 for a user to perform various operation inputs, and the like.

Furthermore, the imaging system 1 includes, for example, a configuration for recording the captured image obtained by the imaging element 55, a configuration for performing image signal processing on the captured image obtained by the imaging element 55, a configuration for performing communication with the interchangeable lens 3, and the like.

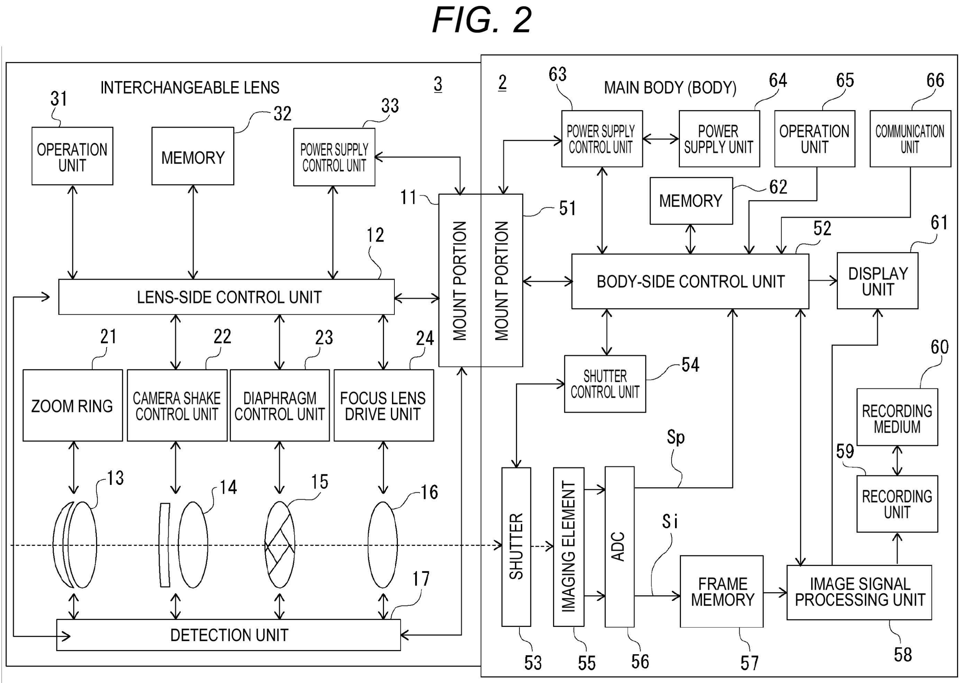

The interchangeable lens 3 is a lens unit in which various lenses such as a zoom lens 13 and a focus lens 16 illustrated in Fig. 2 are provided.

Furthermore, the interchangeable lens 3 includes a drive unit that drives these lenses, a control unit that outputs a drive signal to the drive unit, a mount portion having a connection function and a communication function with respect to the imaging device 2, and the like.

Fig. 2 is a block diagram illustrating an internal configuration of the imaging system 1.

As illustrated in Fig. 2, the interchangeable lens 3 includes a mount portion 11 detachably attached to a mount portion 51 of the imaging device 2. The mount portion 11 has a plurality of terminals for electrical connection with the imaging device 2.

Furthermore, the interchangeable lens 3 includes a lens-side control unit 12, the zoom lens 13, a camera shake correction lens 14, a diaphragm 15, the focus lens 16, and a detection unit 17.

The interchangeable lens 3 further includes a zoom ring 21, a camera shake control unit 22, a diaphragm control unit 23, a focus lens drive unit 24, an operation unit 31, a memory 32, and a power supply control unit 33.

The lens-side control unit 12 includes, for example, a microcomputer including a central processing unit (CPU), a read only memory (ROM), a random access memory (RAM), and the like, and performs overall control of the interchangeable lens 3 by the CPU reading a program stored in a predetermined storage device such as the ROM or the memory 32 into the RAM and executing the program.

The lens-side control unit 12 executes various kinds of control in accordance with an instruction from the imaging device (body) 3 supplied via a predetermined communication terminal of the mount portion 11 or a user's operation received by the zoom ring 21 and the operation unit 31.

For example, the lens-side control unit 12 controls the camera shake correction lens 14 to correct camera shake. Specifically, on the basis of a camera shake amount detected by a camera shake detection sensor in the detection unit 17, the lens-side control unit 12 determines driving conditions (driving direction, driving amount, driving speed, and the like) of the camera shake correction lens 14 in a direction to cancel the camera shake amount, and outputs the determined driving conditions to the camera shake control unit 22 together with a movement command.

The camera shake detection sensor in the detection unit 17 includes, for example, both or one of a gyro sensor and a triaxial acceleration sensor. The gyro sensor is used to detect a shift (shake) in a direction corresponding to pitch (Pitch) or yaw (Yaw) as a correction direction of the camera shake correction lens 14. The triaxial acceleration sensor is used to detect a shift (shake) between an X-axis direction and a Y-axis direction when an optical axis direction is defined as a Z-axis.

The camera shake control unit 22 moves the camera shake correction lens 14 so as to achieve the instructed driving conditions on the basis of the movement command supplied from the lens-side control unit 12.

Furthermore, in a case where power supply is turned off, the lens-side control unit 12 performs control to mechanically lock the camera shake correction lens 14. In a state where power is supplied from the imaging device 2 to the interchangeable lens 3, a position of the camera shake correction lens 14 is maintained at a predetermined position by control via the camera shake control unit 22. On the other hand, if the power supply is turned off, the position control by the camera shake control unit 22 is stopped, so that the camera shake correction lens 14 falls by a predetermined amount in a gravity direction.

Thus, the lens-side control unit 12 mechanically locks the camera shake correction lens 14 via the camera shake control unit 22 in accordance with a timing at which the power supply is turned off, thereby preventing the camera shake correction lens 14 from falling. The camera shake control unit 22 mechanically locks the camera shake correction lens 14 on the basis of a fixing command supplied from the lens-side control unit 12.

Furthermore, the lens-side control unit 12 controls (an aperture diameter of) the diaphragm 15 in accordance with an instruction or the like from the imaging device 2 supplied via a predetermined communication terminal of the mount portion 11. Specifically, the lens-side control unit 12 acquires the aperture diameter of the diaphragm 15 detected by a diaphragm detection sensor in the detection unit 17, issues a command to the diaphragm control unit 23 so as to achieve an F value instructed by the imaging device 2, and drives the diaphragm 15. The diaphragm control unit 23 drives the diaphragm 15 so as to achieve the aperture diameter instructed from the lens-side control unit 12.

Further, the lens-side control unit 12 controls the position of the focus lens 16 on the basis of the instruction from the imaging device 2 supplied via the predetermined communication terminal of the mount portion 11, a current position of the focus lens 16 from the detection unit 17, and the like. Specifically, the lens-side control unit 12 acquires the current position of the focus lens 16 from the detection unit 17, determines driving conditions for moving the focus lens 16 to a predetermined position on the basis of the acquisition result, and outputs the determined driving conditions to the focus lens drive unit 24 together with a movement command. The focus lens drive unit 24 moves the focus lens 16 in the optical axis direction so as to achieve the instructed driving conditions.

Here, the focus lens 16 is configured as a "focus lens group" including one or a plurality of optical elements. In a case where the focus lens group includes a plurality of optical elements, the optical elements are integrally displaced in accordance with focus adjustment.

Note that this similarly applies to the zoom lens 13. In other words, the zoom lens 13 is configured as a "zoom lens group" including one or a plurality of optical elements, and in a case where the zoom lens group includes a plurality of optical elements, the optical elements are integrally displaced in accordance with zoom adjustment.

In this example, the zoom lens 13 and the focus lens 16 are respectively configured as one zoom lens group and one focus lens group. However, the zoom lens 13 and the focus lens 16 may be respectively configured as a plurality of zoom lens groups and a plurality of focus lens groups.

Furthermore, the lens-side control unit 12 performs processing of transmitting a position of the zoom lens 13 (hereinafter, referred to as "zoom lens position") and a position of the focus lens 16 (hereinafter, referred to as "focus lens position") detected by the detection unit 17 to the imaging device 2 (body-side control unit 52).

The detection unit 17 comprehensively represents a configuration for detecting a state of the interchangeable lens 3, such as the positions of the zoom lens 13, the camera shake correction lens 14, and the focus lens 16, and the aperture diameter of the diaphragm 15. In the detection unit 17, the positions of the lenses can be detected by, for example, a magnetic sensor, a photodiode array, a potentiometer, a reflective encoder, or the like.

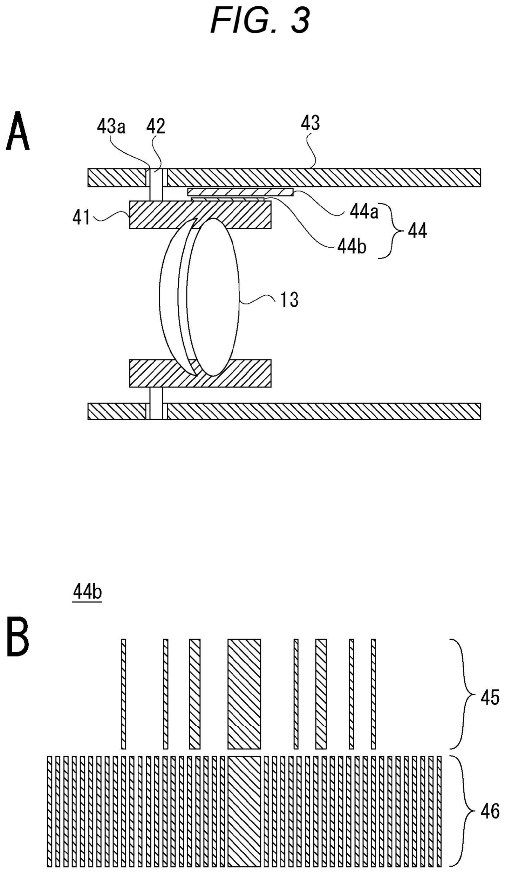

Fig. 3 is a diagram for describing a configuration of a zoom lens position detection unit 44 that detects a zoom lens position. Note that in Fig. 3, a part necessary for describing the configuration of the zoom lens position detection unit 44 among the components constituting the interchangeable lens 3 is extracted and illustrated. Furthermore, the zoom lens position detection unit 44 is one of the detection units 17.

As illustrated in Fig. 3A, the zoom lens 13 is fixed to a pressing ring 41 inside the interchangeable lens 3. A cam pin 42 is attached to the pressing ring 41 so as to protrude toward an outer peripheral surface. For example, three cam pins 42 are attached at equal intervals in a circumferential direction of the pressing ring 41, and are inserted into cam grooves 43a formed in the cam ring 43.

Furthermore, the cam ring 43 is rotatably accommodated in the interchangeable lens 3, and the zoom ring 21 (see Fig. 1) for manually setting a zoom magnification is rotatably arranged along an outer peripheral surface.

The zoom lens 13 is held by the cam ring 43 via the pressing ring 41 and the cam pin 42. When the zoom ring 21 is rotated by the user, the cam ring 43 provided inside the interchangeable lens 3 rotates. When the cam ring 43 rotates, the zoom lens 13 moves in the optical axis direction.

The zoom lens position detection unit 44 is a reflective absolute linear optical encoder, and includes an encoder module 44a having a light emitting unit and a light receiving unit, and a pattern seal 44b on which a pattern illustrated in Fig. 3B is formed.

The encoder module 44a is fixed at a predetermined position of the interchangeable lens 3. The pattern seal 44b is attached to the outer peripheral surface of the pressing ring 41 at a position facing the encoder module 44a.

As illustrated in Fig. 3B, the pattern seal 44b is attached to the pressing ring 41 such that a left-right direction in Fig. 3B is along the optical axis direction of the zoom lens 13. In the pattern seal 44b, different scale patterns are formed in a direction orthogonal to the optical axis direction (vertical direction in Fig. 3B).

A scale pattern 45 formed on an upper side in Fig. 3B is a pattern for detecting an absolute position of the zoom lens 13, and patterns having different widths and intervals are formed in the optical axis direction.

A scale pattern 46 formed on a lower side in Fig. 3B is a pattern for detecting a relative position of the zoom lens 13, and patterns having the same width in the optical axis direction are formed at equal intervals.

The encoder module 44a optically reads the pattern of the pattern seal 44b by irradiating the pattern seal 44b with light by the light emitting unit and receiving light returned after the emitted light is reflected by the pattern seal 44b by the light receiving unit. Then, the encoder module 44a detects a position (absolute value and relative position) of the zoom lens 13 on the basis of the read pattern.

Here, in the interchangeable lens 3, for example, it is conceivable to indirectly detect the position of the zoom lens 13 by detecting the position of the cam ring 43 connected via the cam pin 42. In such a case, there is a possibility that it becomes difficult to accurately detect the position of the zoom lens 13 due to rattling or the like between the cam pin 42 and the cam groove 43a.

Therefore, in the interchangeable lens 3, the position of the zoom lens 13 can be directly detected by using the zoom lens position detection unit 44. Here, the direct detection means that the position of the zoom lens 13 is directly detected without other connection mechanisms (for example, the cam pin 42 and the cam ring 43).

With this arrangement, even in the structure in which rattling or the like occurs between the cam pin 42 and the cam groove 43a, in the interchangeable lens 3, the position of the zoom lens 13 can be accurately detected by the zoom lens position detection unit 44.

Returning to Fig. 2, the focus lens drive unit 24 can include, for example, an ultrasonic motor, a DC motor, a linear actuator, a stepping motor, a piezo element (piezoelectric element), and the like as a drive source of the lens.

The operation unit 31 corresponds to a focus ring or the like for manually setting the focus lens 16, receives a user's manual operation, and supplies an operation signal corresponding to the received operation to the lens-side control unit 12. Furthermore, the zoom ring 21 is also one of the operation units 31.

The memory 32 is constituted with a non-volatile memory such as an electrically erasable programmable (EEP) ROM, for example, and can be used to store an operation program of the lens-side control unit 12 and various kinds of data.

Data of a cam curve is stored in the memory 32, which will be described later again.

The power supply control unit 33 detects an amount of power of the power supply supplied from the imaging device 2, optimally distributes the amount of power to respective units (the lens-side control unit 12 and various drive units) in the interchangeable lens 3 on the basis of the detected amount of power, and supplies the power.

The imaging device 2 that is on the body side is provided with the mount portion 51 to which the interchangeable lens 3 is detachably attached. The mount portion 51 has a plurality of terminals for electrical connection with the mount portion 11 of the interchangeable lens 3.

If the interchangeable lens 3 is mounted on the mount portion 51 of the imaging device 2, the corresponding terminals are electrically and physically connected between the mount portion 51 and the mount portion 11 of the interchangeable lens 3. Examples of the terminals to be connected include a terminal for supplying power (power supply terminal), a terminal for transmitting a command or data (communication terminal), a terminal for transmitting a synchronization signal (synchronization signal terminal), and the like.

The imaging device 2 further includes the body-side control unit 52, a shutter 53, a shutter control unit 54, the imaging element 55, an analog to digital converter (ADC) 56, a frame memory 57, an image signal processing unit 58, a recording unit 59, a recording medium 60, the display unit 61, a memory 62, a power supply control unit 63, a power supply unit 64, an operation unit 65, and a communication unit 66.

The body-side control unit 52 includes a microcomputer including a CPU, a ROM, a RAM, and the like, and performs overall control of the imaging device 2 and the interchangeable lens 3 by the CPU reading a program stored in a predetermined storage device such as the ROM or the memory 62 into the RAM and executing the program.

The memory 62 is constituted with a non-volatile memory such as an EEPROM, for example, and can be used for storing an operation program of the body-side control unit 52 and various kinds of data.

The body-side control unit 52 causes the imaging element 55 to execute imaging processing on the basis of an operation signal representing an operation of the user supplied from the operation unit 65. Further, the body-side control unit 52 transmits a predetermined command to the interchangeable lens 3 via the mount portion 51 to drive the focus lens 16 and the like.

Furthermore, the body-side control unit 52 can acquire, for example, information indicating a zoom lens position and a focus lens position from the interchangeable lens 3.

The shutter 53 is arranged on a front surface (subject side) of the imaging element 55, and is opened and closed under the control of the shutter control unit 54. When the shutter 53 is in a closed state, light of the subject passing through an optical system of the interchangeable lens 3 is blocked. The shutter control unit 54 detects an open/closed state of the shutter 53 and supplies information indicating the detection result to the body-side control unit 52. The shutter control unit 54 drives the shutter 53 to an open state or a closed state on the basis of the control of the body-side control unit 52.

The imaging element 55 is configured as, for example, an image sensor including a charge coupled device (CCD) sensor, a complementary metal oxide semiconductor (CMOS) sensor, or the like, and outputs a received light signal obtained by imaging an object.

In a case where the imaging element 55 includes a CCD sensor or a CMOS sensor, an electronic shutter can be used, and thus, the shutter 53 can be omitted. In a case where the shutter 53 is omitted, the shutter control unit 54 that is to be used for the control is also omitted.

The imaging element 55 includes pixels (RGB pixels) for capturing an image, and pixels for acquiring detection information by an image-plane phase difference method, that is, phase difference detection pixels for acquiring phase difference information between a pair of images (phase difference information between a pair of images formed by pupil division).

In the imaging element 55, the phase difference detection pixels are discretely arranged on a pixel array surface in which the RGB pixels are two-dimensionally arrayed by a predetermined array pattern such as a Bayer array.

A received light signal obtained by photoelectric conversion of the RGB pixels in the imaging element 55 is converted into a digital signal by the ADC 56, temporarily held in the frame memory 57, and then input to the image signal processing unit 58.

In Fig. 2, a captured image signal obtained by digitally converting the received light signal of the RGB pixels as described above is referred to as a "captured image signal Si".

Meanwhile, the received light signal obtained by photoelectric conversion of the phase difference detection pixels in the imaging element 55 is converted into a digital signal by the ADC 56 and supplied to the body-side control unit 52.

In Fig. 2, the signal obtained by the digital conversion of the received light signal of the phase difference detection pixels is referred to as a "phase difference pixel signal Sp".

The body-side control unit 52 analyzes a phase difference between the pair of images on the basis of the phase difference pixel signal Sp supplied via the ADC 56, and calculates a focus shift amount with respect to the subject to be focused (in-focus target object), that is, a defocus amount DF.

The body-side control unit 52 performs focus-related processing on the basis of the defocus amount DF calculated in this manner, which will be described again.

The image signal processing unit 58 applies predetermined image signal processing to the captured image input via the frame memory 57. Here, examples of the image signal processing include demosaic processing, white balance (WB) adjustment, gamma correction processing, and the like.

The image signal processing unit 58 applies the image signal processing to a captured image as a raw image input via the frame memory 57, then converts the captured image into image data in a predetermined file format, and records the image data in the recording medium 60 via the recording unit 59.

Furthermore, the image signal processing unit 58 converts the captured image to which the image signal processing has been applied into an image signal according to a predetermined display format, supplies the image signal to the display unit 61, and displays the captured image.

The recording medium 60 includes a non-volatile memory, and the recording unit 59 is configured to be able to write data to the recording medium 60 and read data recorded in the recording medium 60. Here, the recording medium 60 may be detachably attached to the imaging device 2.

The display unit 61 includes a panel-type display device such as a liquid crystal panel or an organic EL panel, and can display an image.

The display unit 61 is mounted on a back surface opposite to a front surface of the imaging device 2 on which the mount portion 51 is arranged, and can perform display of a so-called through image, display of an image read from the recording medium 60, display of a GUI as various operation screens, and the like.

The power supply control unit 63 supplies the power supplied from the power supply unit 64 to each unit of the imaging device 2 including the body-side control unit 52. Furthermore, the power supply control unit 63 calculates an amount of power of the power supply that can be supplied to the interchangeable lens 3 on the basis of an operation state of the imaging device 2, and supplies the power to the interchangeable lens 3 via the mount portion 51.

The power supply unit 64 includes, for example, a secondary battery such as a NiCd battery, a NiMH battery, or a Li battery. Note that the power supply unit 64 can also be configured to be able to receive power supply from a commercial AC power supply via an AC adapter, or the like.

The operation unit 65 comprehensively represents an operator for allowing the user to perform operation input to the imaging device 2, such as various hardware keys such as a shutter button, a mode dial, and a zoom button, and a touch panel provided to be able to detect touch operation on a display screen of the display unit 61.

The operation unit 65 accepts the operation of the user and supplies an operation signal in accordance with the operation to the body-side control unit 52.

The communication unit 66 performs wired or wireless communication with an external device, for example.

Here, in the following description, focus-related processing including AF processing and zoom tracking processing will be described, but in the present specification, "subject position", "subject distance", "focus position (in-focus position)", "in-focus distance", "focus lens position", and "zoom lens position" are used as terms related to the focus-related processing.

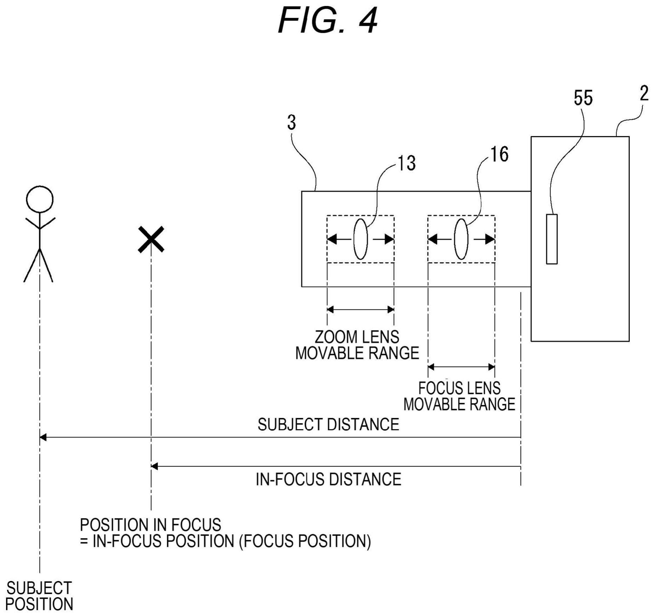

The definition of these terms will now be described with reference to Fig. 4. Fig. 4 is a diagram for describing a subject position, a subject distance, a focus position, an in-focus distance, a focus lens position, and a zoom lens position.

As illustrated in Fig. 4, the "subject position" literally represents a position where a subject exists, and the "subject distance" represents a distance from the imaging system 1 to the subject. Note that the "subject distance" strictly corresponds to a distance from a focal point of the interchangeable lens 3 to the "subject position".

The "focus position" represents a position in focus, and can be rephrased as an "in-focus position". The "in-focus distance" means a distance from the imaging system 1 to the focus position.

Here, as understood with reference to Fig. 4, the subject distance and the in-focus distance are distances to a position outside the interchangeable lens 3, and are values represented by actual distances such as 2 m, 3 m, 4 m,..., for example.

The "focus lens position" means a position of the focus lens 16 within a movable range of the focus lens 16 in the interchangeable lens 3 as illustrated in Fig. 4, and the "zoom lens position" similarly means a position of the zoom lens 13 within a movable range of the zoom lens 13 in the interchangeable lens 3.

Here, the defocus amount DF obtained by the image-plane phase difference method represents a shift amount between the "subject position" and the "focus position" when the "subject position" in Fig. 4 is a position of an in-focus target object. That is, the defocus amount DF in this case does not directly represent an error amount of the focus lens position.

Note that in the following description, an example will be given in which information directly indicating the position of the zoom lens 13 is used as the "zoom lens position". However, the "zoom lens position" is not necessarily limited to the information directly indicating the position of the zoom lens 13, and information correlated with the position of the zoom lens 13 and uniquely convertible into the information on the position of the zoom lens 13 can also be used as the "zoom lens position".

Furthermore, an example of using information directly indicating a distance to the subject as the "subject distance" will be described. However, the "subject distance" is not necessarily limited to the information directly indicating the distance to the subject distance, and information correlated with the distance to the subject distance and uniquely convertible to the information on the distance to the subject can also be used as the "subject distance".

Here, a cam curve used in the focus-related processing will be described.

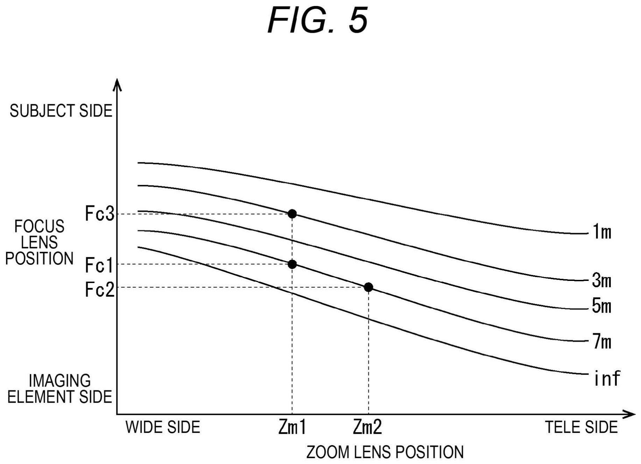

Fig. 5 is a diagram for describing a cam curve. The cam curve is data indicating a correspondence relationship between the zoom lens position and the focus lens position with respect to a plurality of in-focus distances, and is stored in the memory 32 of the interchangeable lens 3.

In the imaging system 1, for example, when the imaging device 2 is powered on with the interchangeable lens 3 attached to the imaging device 2, data of the cam curve stored in the memory 32 is transmitted to the imaging device 2 and stored in the memory 62. With this arrangement, both the imaging device 2 and the interchangeable lens 3 can hold the same cam curve. Note that it is sufficient that both the imaging device 2 and the interchangeable lens 3 can hold the same cam curve, and the same cam curve is stored in advance in the memory 32 and the memory 62.

In the graph illustrated in Fig. 5, a horizontal axis represents a zoom lens position (wide (Wide) side to tele (Tele) side), and a vertical axis represents a focus lens position (imaging element side to subject side), and the zoom lens positions and the focus lens positions corresponding to a plurality of in-focus distances (1 m, 3 m, 5 m, 7 m, infinity (inf)) are illustrated.

For example, in a case where an in-focus distance is 7 m and a zoom lens position is Zm1, a focus lens position for focusing on a subject is Fc1.

Furthermore, even if the in-focus distance is the same at 7 m, in a case where the zoom lens position is changed and the zoom lens position is set to Zm2, the focus lens position for focusing on the subject is changed to Fc2.

Furthermore, even if the zoom lens position does not change at Zm1, in a case where a subject distance changes from 7 m to 10 m, the focus lens position for focusing on the subject changes from Fc1 to Fc3.

In this manner, information on the zoom lens position and the in-focus distance is given by the cam curve, whereby information on the focus lens position corresponding to the combination of the zoom lens position and the in-focus distance can be acquired. Furthermore, by being given the information on the zoom lens position and the focus lens position, it is also possible to acquire information on the in-focus distance corresponding to the combination of the zoom lens position and the focus lens position.

### <2. Focus-Related Processing>

Next, focus-related processing of performing drive control of the focus lens 16 will be described. In the present embodiment, AF processing and zoom tracking processing are provided as the focus-related processing. However, the focus-related processing may include processing other than the AF processing and the zoom tracking processing.

The AF processing is processing of moving the focus lens 16 in the optical axis direction in order to automatically focus on an arbitrary subject, and is executed, for example, when a shutter button is so-called half-pressed. With this arrangement, even if a predetermined subject moves, the subject can be constantly focused while the shutter button is half-pressed.

The zoom tracking processing is processing of moving the focus lens 16 in the optical axis direction in accordance with the movement of the zoom lens 13 in order to achieve a change in magnification of the image while maintaining the focused state.

Here, the imaging system 1 is provided with a plurality of modes for performing the drive control of the focus lens 16 when performing the focus-related processing (AF processing and zoom tracking processing).

In the imaging system 1, one of a plurality of modes is set, and the drive control of the focus lens 16 is performed on the basis of a parameter defined in the set mode. Note that the parameter indicates a value and a condition necessary for determining driving conditions (driving direction, driving amount, driving speed, and the like) of the focus lens 16 for performing the drive control of the focus lens 16.

In the present embodiment, a settling priority mode and a following priority mode are provided as the plurality of modes.

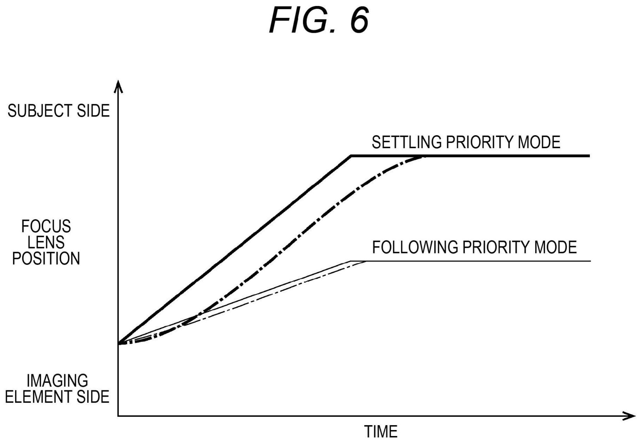

Fig. 6 is a diagram for describing the settling priority mode and the following priority mode. In Fig. 6, a target focus position in the settling priority mode is indicated by a thick solid line, and a movement locus of the focus lens 16 during control in the settling priority mode is indicated by a thick chain line. Furthermore, in Fig. 6, a target focus position in the following priority mode is indicated by a thin solid line, and a movement locus of the focus lens 16 during control in the following priority mode is indicated by a thin chain line.

The settling priority mode is a mode in which the focus lens 16 is moved toward a target focus lens position regardless of a control cycle by the lens-side control unit 12 (hereinafter, a target focus lens position). In other words, the settling priority mode is a mode in which the focus lens 16 only needs to arrive at the target focus lens position.

Therefore, as illustrated in Fig. 6, in the settling priority mode, a delay request during driving is low, and the movement locus of the focus lens 16 is separated from the target focus position to some extent, but a maximum speed to be set is high. However, in the settling priority mode, overshoot is highly required.

The settling priority mode is mainly set during the AF processing.

The following priority mode is a mode in which a target focus lens position is designated for each control cycle by the lens-side control unit 12, and the focus lens 16 is moved to the designated target focus lens position within the control cycle. In other words, the following priority mode is a mode in which the focus lens 16 is caused to follow the target focus lens position designated for each control cycle as needed. Therefore, as illustrated in Fig. 6, in the following priority mode, the delay request during driving is high, and the focus lens 16 is caused to follow the target focus lens position with almost no delay, while the maximum speed to be set is low.

The following priority mode is mainly set during the zoom tracking processing. Note that as will be described in detail later, in the zoom tracking processing, the settling priority mode may be set under a certain condition.

### [2.1. AF Processing in Settling Priority Mode]

Next, the AF processing in the settling priority mode when the zoom lens 13 is not moved will be described.

In the AF processing, the drive control of the focus lens 16 is performed by the parameter in accordance with the settling priority mode.

Specifically, the lens-side control unit 12 transmits information on the zoom lens position and the focus lens position detected by the detection unit 17 to the imaging device 2 as needed. Upon acquiring the information on the zoom lens position and the focus lens position, the body-side control unit 52 calculates an in-focus distance with reference to the cam curve on the basis of the zoom lens position and the focus lens position. For example, in the example of Fig. 5, if the zoom lens position is Zm1 and the focus lens position is Fc1, the body-side control unit 52 calculates 7 m as the in-focus distance.

Furthermore, the body-side control unit 52 analyzes a phase difference between the pair of images on the basis of the phase difference pixel signals Sp supplied via the ADC 56 at predetermined intervals to calculate the defocus amount DF.

Then, the body-side control unit 52 adds the calculated in-focus distance and the defocus amount DF to calculate a distance to the in-focus target object (subject distance) as a target in-focus distance.

After calculating the target in-focus distance, the body-side control unit 52 transmits information indicating the target in-focus distance to the imaging device 2. The lens-side control unit 12 receives the information indicating the target in-focus distance transmitted from the imaging device 2.

Furthermore, the lens-side control unit 12 acquires a current zoom lens position and a current focus lens position detected by the detection unit 17.

Then, the lens-side control unit 12 refers to the cam curve on the basis of the current zoom lens position and the target in-focus distance received from the interchangeable lens 3, and calculates a target focus lens position for focusing on the in-focus target object. For example, in the example of Fig. 5, if the zoom lens position is Zm1 and the target in-focus distance is 3 m, the lens-side control unit 12 calculates Fc3 as the target focus position.

Subsequently, the lens-side control unit 12 determines driving conditions for moving the focus lens 16 to the target focus lens position on the basis of the current focus lens position and the target focus lens position. Then, the lens-side control unit 12 outputs the determined driving conditions to the focus lens drive unit 24 together with a movement command.

With this arrangement, in the interchangeable lens 3, the focus lens 16 is driven so that the focus lens position coincides with the target focus lens position, and autofocus is realized.

Note that in the above description, the processing of obtaining the target in-focus distance from the defocus amount DF is performed on the imaging device 2 side, and the processing of obtaining the target focus lens position from the target in-focus distance is performed on the interchangeable lens 3 side. However, this processing may be performed by either the imaging device 2 or the interchangeable lens 3. For example, the processing of obtaining the target focus lens position from the defocus amount DF may be performed by only one of the imaging device 2 and the interchangeable lens 3.

### [2.2. Zoom Tracking Processing in Following Priority Mode]

Next, the zoom tracking processing in the following priority mode will be described.

In the zoom tracking processing, the drive control of the focus lens 16 is mainly performed by the parameter in accordance with the above-described following priority mode.

Specifically, the lens-side control unit 12 transmits information on the zoom lens position and the focus lens position detected by the detection unit 17 to the imaging device 2 as needed. Upon acquiring the information on the zoom lens position and the focus lens position, the body-side control unit 52 calculates an in-focus distance with reference to the cam curve on the basis of the zoom lens position and the focus lens position. For example, in the example of Fig. 5, if the zoom lens position is Zm1 and the focus lens position is Fc1, the body-side control unit 52 calculates 7 m as the in-focus distance.

Furthermore, the body-side control unit 52 analyzes a phase difference between the pair of images on the basis of the phase difference pixel signals Sp supplied via the ADC 56 at predetermined intervals to calculate the defocus amount DF.

Then, the body-side control unit 52 adds the calculated in-focus distance and the defocus amount DF to calculate a distance to the in-focus target subject (subject distance) as the target in-focus distance.

After calculating the target in-focus distance, the body-side control unit 52 calculates, for each control cycle of the lens-side control unit 12, a target position for moving the focus lens 16 in the control cycle. As the target position, a position at which a delay amount during driving of the focus lens 16 is minimized (for example, 0.5 depth or less) is calculated.

The body-side control unit 52 transmits information indicating the target position to the imaging device 2. The lens-side control unit 12 receives the information indicating the target position transmitted from the imaging device 2.

Furthermore, the lens-side control unit 12 acquires the current zoom lens position and the current focus lens position detected by the detection unit 17 for each control cycle.

Then, the lens-side control unit 12 calculates a target focus lens position for focusing on the target position with reference to the cam curve on the basis of the current zoom lens position and the target position received from the interchangeable lens 3 for each control cycle.

Subsequently, the lens-side control unit 12 determines driving conditions for moving the focus lens 16 to the target focus lens position on the basis of the current focus lens position and the target focus lens position for each control cycle. Then, the lens-side control unit 12 outputs the determined driving conditions to the focus lens drive unit 24 together with a movement command.

With this arrangement, in the interchangeable lens 3, the focus lens 16 is driven such that the focus lens position coincides with the target focus lens position as needed for each control cycle, and zoom tracking is realized.

Here, as described above, the zoom lens 13 is held by the cam ring 43 via the pressing ring 41 and the cam pin 42, and a clearance is formed between the cam pin 42 and the cam groove 43a.

Therefore, when the user moves the imaging system 1 in, for example, an upward direction or a downward direction and a posture of the imaging system 1 changes, the zoom lens 13 may move slightly due to rattling or the like due to the clearance between the cam pin 42 and the cam groove 43a.

Then, for example, when the zoom lens 13 has moved slightly due to the posture change of the imaging system 1 during the AF processing, if the mode is switched from the settling priority mode to the following priority mode, the mode is frequently switched, and responsiveness of the zoom lens 13 changes due to the difference in drive control by different modes, sound or vibration is generated, and there is a possibility that an uncomfortable feeling is given to the user.

Therefore, in the present embodiment, in the zoom tracking processing performed during the AF processing (settling priority mode), the mode is switched on the basis of a movement amount of the zoom lens 13.

### [2.3. Zoom Tracking Processing During AF Processing]

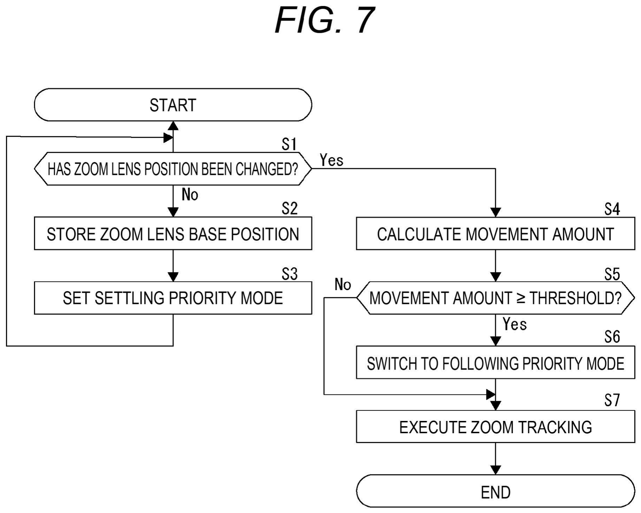

Fig. 7 is a flowchart illustrating a flow of the zoom tracking processing during the AF processing.

As described above, when the AF processing is started, the settling priority mode is set as the mode, and the drive control of the focus lens 16 is performed on the basis of the parameter of the settling priority mode.

Then, when the zoom tracking processing during the AF processing is started, as illustrated in Fig. 7, in step S1, the lens-side control unit 12 acquires a current zoom lens position detected by the zoom lens position detection unit 44. Then, the lens-side control unit 12 compares the acquired current zoom lens position with a previously acquired zoom lens position to determine whether or not the zoom lens 13 has moved.

Here, since it is simply determined whether or not the zoom lens 13 has moved, it is determined without distinguishing between movement of the zoom lens 13 based on the operation of the zoom ring 21 and movement of the zoom lens 13 due to the posture change.

Then, in a case where the zoom lens 13 has not moved (No in step S1), the lens-side control unit 12 stores the zoom lens position as a zoom lens base position in step S2. Furthermore, in step S3, the lens-side control unit 12 sets the settling priority mode. That is, the parameter of the settling priority mode is maintained.

On the other hand, in a case where the zoom lens 13 has moved (Yes in step S1), in step S4, the lens-side control unit 12 calculates an absolute value of a difference between the current zoom lens position detected by the zoom lens position detection unit 44 and the zoom lens base position as a movement amount of the zoom lens 13.

In step S5, the lens-side control unit 12 determines whether or not the movement amount of the zoom lens 13 is equal to or greater than a predetermined threshold.

Here, the threshold is set to a maximum value of the movement amount of the zoom lens 13 generated due to mechanical tolerance of each unit holding the zoom lens 13. Therefore, when the zoom lens 13 has moved due to the posture change of the imaging system 1, the movement amount of the zoom lens 13 does not become equal to or greater than the threshold.

Therefore, it can be said that it is determined in step S5 whether or not the movement of the zoom lens 13 is based on the operation of the zoom ring 21 or the movement of the zoom lens 13 is due to the posture change.

If the movement amount of the zoom lens 13 is less than the threshold (No in step S5), that is, if the movement of the zoom lens 13 is due to the posture change, the lens-side control unit 12 skips step S6 to maintain the current mode (settling priority mode).

On the other hand, in a case where the movement amount of the zoom lens 13 is equal to or greater than the threshold (Yes in step S5), that is, in a case where the movement of the zoom lens 13 is based on the operation of the zoom ring 21, the lens-side control unit 12 switches from the settling priority mode to the following priority mode in step S6. That is, the parameter is switched to the parameter of the following priority mode. Furthermore, the lens-side control unit 12 notifies the imaging device 2 of the fact that the mode has been switched.

In step S7, the lens-side control unit 12 performs zoom tracking to drive control of the zoom lens 13 on the basis of the parameter of the mode being set (the settling priority mode or the following priority mode).

Therefore, while the settling priority mode is set, even if the zoom lens 13 has moved slightly, the processing similar to the AF processing in the settling priority mode is performed. Furthermore, when the mode is switched to the following priority mode, the processing similar to the zoom tracking processing in the following priority mode is performed.

As can be seen from this flowchart, the movement amount of the zoom lens 13 is a change amount from a position where the zoom lens 13 is stopped (zoom lens base position). Therefore, even if the zoom ring 21 is slowly rotated, it is possible to prevent the movement amount of the zoom lens 13 from remaining below the threshold.

Furthermore, when the movement amount of the zoom lens 13 exceeds the threshold even once, the following priority mode is maintained until the zoom lens 13 stops (until No in step S1). With this arrangement, the following priority mode can be maintained even when the rotation speed of the zoom ring 21 changes.

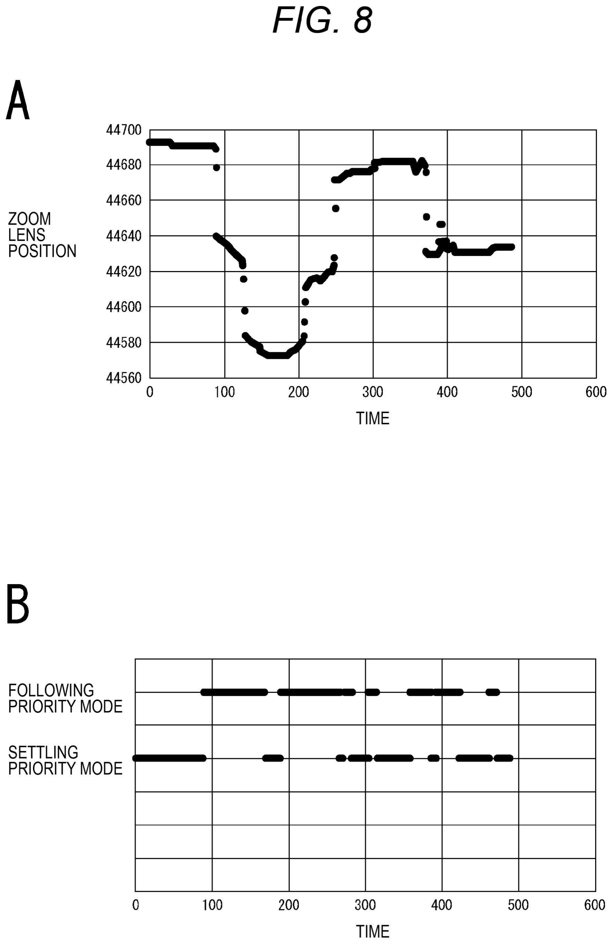

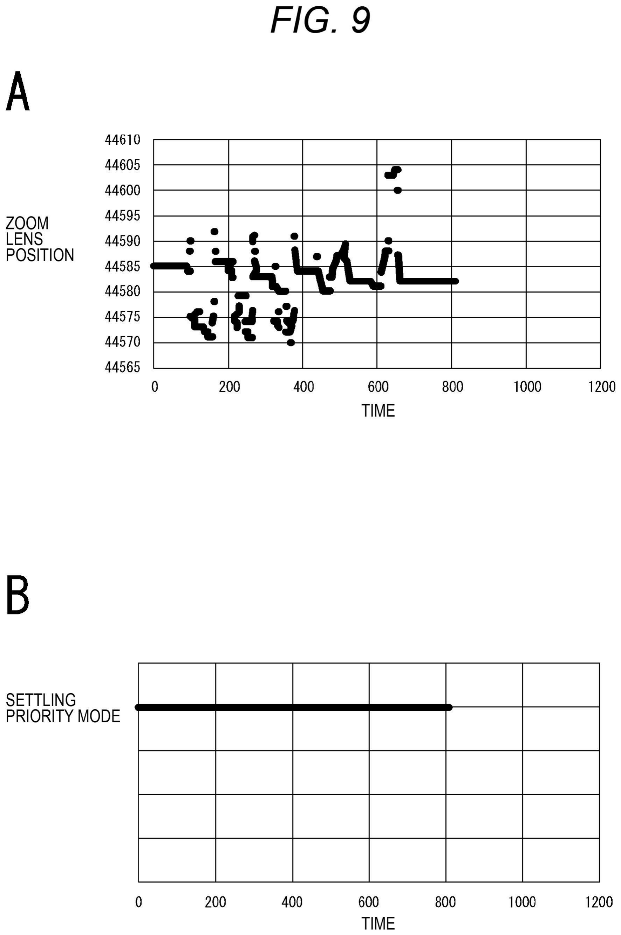

Fig. 8 is a diagram for describing mode switching when a mode is switched in accordance with movement of the zoom lens 13 as a comparative example. Figs. 9 to 11 are diagrams for describing the mode switching when the mode is switched according to whether or not the movement amount of the zoom lens 13 is equal to or greater than the threshold.

Note that Figs. 8A, 9A, 10A, and 11A are diagrams illustrating the movement of the zoom lens 13. Figs. 8B, 9B, 10B, and 11B are diagrams illustrating the mode switching based on the movement of the zoom lens 13.

In the present embodiment, the mode is switched depending on whether or not the movement amount of the zoom lens 13 is equal to or greater than the threshold. However, switching of the mode in a case where the mode is switched when the zoom lens 13 has moved will be described as the comparative example.

In a case where the mode is switched when the zoom lens 13 has moved even slightly, if the zoom lens 13 has moved slightly due to the posture change of the imaging system 1 as illustrated in Fig. 8A, the mode is frequently switched from the settling priority mode to the following priority mode as illustrated in Fig. 8B. Then, if the mode is frequently switched, different drive control is performed, and thus sound or vibration occurs.

Therefore, in the present embodiment, since the mode cannot be switched until the movement amount of the zoom lens 13 becomes equal to or greater than the threshold, even if the zoom lens 13 has moved slightly due to the posture change of the imaging system 1 as illustrated in Fig. 9A, the mode is not switched as illustrated in Fig. 9B. With this arrangement, it is possible to reduce generation of sound or vibration.

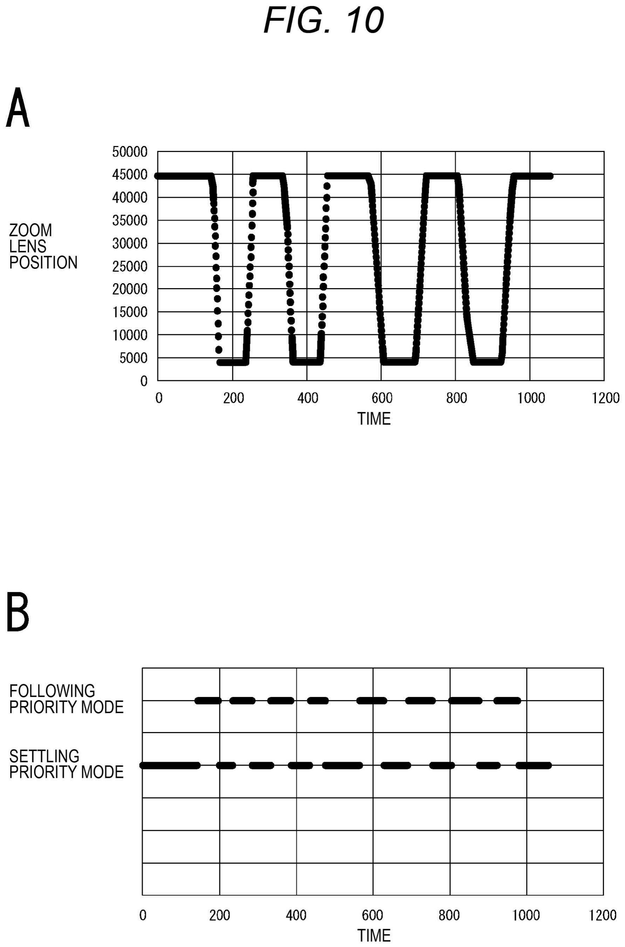

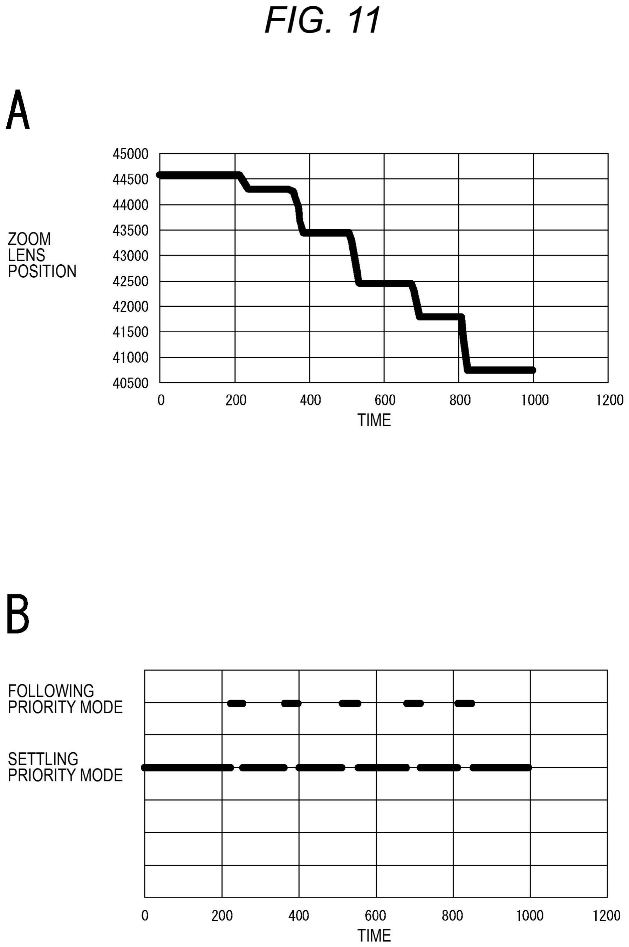

On the other hand, as illustrated in Figs. 10 and 11, in a case where the zoom lens 13 has moved by the operation of the zoom ring 21, the mode is switched to the following priority mode, and it is possible to perform zoom tracking with excellent responsiveness with less shift with respect to the movement of the zoom lens 13.

In particular, since the mode is switched when the movement amount from the state where the zoom lens 13 is stopped becomes equal to or greater than the threshold, it is possible to avoid a situation where the mode cannot be switched even when the zoom ring 21 is slowly operated as illustrated in Fig. 11.

### <3. Modifications>

Note that the embodiment is not limited to the specific examples described above, and may have configurations as various modifications.

For example, in the above-described embodiment, as the zoom tracking processing during the AF processing, the mode is switched in a case where the movement amount of the zoom lens 13 is equal to or greater than the threshold. However, the mode may be switched in a case where the movement amount of the zoom lens 13 is equal to or greater than the threshold in the zoom tracking processing that is not in the AF processing. For example, in all situations where the zoom tracking processing is performed, the mode may be switched similarly to the zoom tracking processing during the AF processing described above.

Furthermore, in the above embodiment, the threshold is set to the maximum value of the movement amount of the zoom lens 13 generated on the basis of the mechanical tolerance of each unit holding the zoom lens 13. That is, the mode is not switched by the movement of the zoom lens 13 due to the posture change, and the mode is switched by the movement of the zoom lens 13 based on the operation of the zoom ring 21.

However, the threshold is not limited thereto. For example, the threshold may be set such that the mode is not switched when the movement amount of the zoom lens 13 based on the operation of the zoom ring 21 is small.

Furthermore, in the above embodiment, a reflective absolute linear optical encoder is used as the zoom lens position detection unit 44 that directly measures the position of the zoom lens 13. However, the zoom lens position detection unit 44 may be another sensor as long as the position of the zoom lens 13 can be directly measured.

### <4. Summary of Embodiment>

As described above, the lens device (interchangeable lens 3) according to the embodiment includes the zoom lens 13, the focus lens 16, the detection unit (zoom lens position detection unit 44) that directly detects the position of the zoom lens 13, and the control unit (lens-side control unit 12) that maintains the parameter for performing drive control of the focus lens 16 in a case where the movement amount of the zoom lens 13 based on the detection result of the detection unit is less than a predetermined threshold, switches the parameter in a case where the movement amount of the zoom lens 13 is equal to or greater than the threshold, and performs drive control of the focus lens 16 on the basis of the maintained or switched parameter.

With this arrangement, the interchangeable lens 3 can perform zoom tracking while maintaining the parameter of the AF processing, for example, without switching the parameter when the zoom lens 13 has moved slightly due to the posture change or the like, and can perform zoom tracking by switching the parameter when the zoom lens 13 has moved to some extent by the operation of the zoom ring 21 or the like.

Thus, in the interchangeable lens 3, since the parameter is not switched when the zoom lens 13 has moved slightly due to the posture change or the like, the generation of sound or vibration can be reduced and the uncomfortable feeling is not given to the user. Furthermore, the interchangeable lens 3 can perform appropriate zoom tracking in accordance with the movement of the zoom lens 13.

A plurality of modes (settling priority mode and following priority mode) in which the parameter is defined is provided, the mode is maintained in a case where the movement amount of the zoom lens 13 is less than the threshold, and the mode is switched in a case where the movement amount of the zoom lens 13 is equal to or greater than a predetermined threshold.

With this arrangement, in the interchangeable lens 3, an optimum mode is set in accordance with the movement amount of the zoom lens 13, and the drive control of the zoom lens 13 can be performed with the parameter in accordance with the set mode.

A first mode (settling priority mode) in which a target position (target focus position) that does not depend on a control cycle is instructed, and a second mode (following priority mode) in which a target position (target focus position) for each control cycle is instructed are provided, the first mode is maintained in a case where the movement amount of the zoom lens 13 is less than the threshold, and the mode is switched to the second mode in a case where the movement amount of the zoom lens 13 is equal to or greater than the threshold.

With this arrangement, when the zoom lens 13 has moved slightly due to the posture change or the like, the interchangeable lens 3 performs zoom tracking with the parameter of the settling priority mode without switching the mode. Furthermore, when the zoom lens 13 has moved to some extent by the operation of the zoom ring 21 or the like, the interchangeable lens 3 can switch the mode and perform zoom tracking with the parameter of the following priority mode. Therefore, when the zoom lens 13 has moved to some extent by the operation of the zoom ring 21 or the like, the interchangeable lens 3 can realize highly accurate zoom tracking with less delay of the focus lens 16.

The movement amount is a change amount from a position where the zoom lens 13 is stopped.

With this arrangement, even when the zoom lens 13 is moved extremely slowly, if the movement amount (change amount) of the zoom lens 13 is equal to or greater than the threshold, the interchangeable lens 3 can perform zoom tracking by switching the parameter. That is, the interchangeable lens 3 can detect the zoom operation regardless of an operation speed of the zoom ring 21.

The parameter after the switching is maintained, until the zoom lens 13 stops after the movement amount of the zoom lens 13 becomes equal to or greater than the threshold.

With this arrangement, in the interchangeable lens 3, the parameter is maintained as long as the zoom lens 13 does not stop after the movement amount of the zoom lens 13 becomes equal to or greater than the threshold once, and thus, even if the zoom speed changes during the zoom operation, the parameter is maintained, and it is possible to continue highly accurate zoom tracking with less delay of the focus lens 16.

The control unit (lens-side control unit 12) switches the parameter in a case where the movement amount of the zoom lens 13 is equal to or greater than the predetermined threshold during autofocus for focusing on a predetermined subject.

With this arrangement, in the case where the movement amount of the zoom lens 13 is less than a predetermined value, the zoom tracking can be performed using the parameter during the autofocus, and it is possible to reduce the uncomfortable feeling such as sound or vibration given to the user.

The first mode is set during the autofocus for focusing on the predetermined subject, and the second mode is set in a case where the movement amount of the zoom lens 13 is equal to or greater than the predetermined threshold during the autofocus.

With this arrangement, the interchangeable lens 3 can perform zoom tracking with the parameter of the settling priority mode without switching the mode when the zoom lens 13 has moved slightly due to the posture change or the like, and can perform zoom tracking with the parameter of the following priority mode by switching the mode when the zoom lens 13 has moved to some extent by the operation of the zoom ring 21 or the like. Therefore, the interchangeable lens 3 can reduce the uncomfortable feeling given to the user, and can realize highly accurate zoom tracking with less delay of the focus lens 16.

The detection unit (zoom lens position detection unit 44) is capable of detecting an absolute position and a relative position of the zoom lens 13.

With this arrangement, the interchangeable lens 3 can accurately detect the position of the zoom lens 13.

The threshold is set to a maximum value of the movement amount of the zoom lens 13 generated on the basis of the mechanical tolerance of each unit (pressing ring 41, cam pin 42, and cam ring 43) holding the zoom lens 13.

With this arrangement, the movement amount of the zoom lens 13 due to the posture change of the imaging system 1 can be made less than the threshold, and the parameter (mode) can be prevented from being switched.

Furthermore, a method for controlling a lens device maintains a parameter for performing drive control of the focus lens 16 in a case where a movement amount of the zoom lens 13 based on a detection result of a detection unit that directly detects a position of the zoom lens 13 is less than a predetermined threshold, and switches the parameter in a case where the movement amount of the zoom lens 13 is equal to or greater than the threshold, and performs drive control of the focus lens 16 on the basis of the maintained or switched parameter.

Further, the imaging system 1 is an imaging system 1 including the lens device (interchangeable lens 3) and the imaging device 2, in which the lens device includes the zoom lens 13, the focus lens 16, the detection unit that directly detects the position of the zoom lens 13, and the control unit that maintains a parameter for performing drive control of the focus lens 16 in a case where the movement amount of the zoom lens 13 based on a detection result of the detection unit is less than a predetermined threshold, switches the parameter in a case where the movement amount of the zoom lens 13 is equal to or greater than the threshold, and performs drive control of the focus lens 16 on the basis of the maintained or switched parameter, and the imaging device includes an imaging element that captures a subject image incident via the lens device.

Note that the effects described in the present specification are merely examples and are not limited, and other effects may be provided.

### <5. Present Technology>

Note that the present technology can also adopt the following configurations.
(1) A lens device including:
   a zoom lens;
   a focus lens;
   a detection unit that directly detects a position of the zoom lens; and
   a control unit that maintains a parameter for performing drive control of the focus lens in a case where a movement amount of the zoom lens based on a detection result of the detection unit is less than a predetermined threshold, switches the parameter in a case where the movement amount of the zoom lens is equal to or greater than the threshold, and performs drive control of the focus lens on the basis of the maintained or switched parameter.
(2) The lens device according to (1), in which
   a plurality of modes in which the parameter is defined is provided,
   the mode is maintained in a case where the movement amount of the zoom lens is less than the threshold, and the mode is switched in a case where the movement amount of the zoom lens is equal to or greater than the threshold.
(3) The lens device according to (2), in which
   a first mode in which a target position that does not depend on a control cycle is instructed, and a second mode in which a target position for each control cycle is instructed are provided,
   the first mode is maintained in a case where the movement amount of the zoom lens is less than the threshold, and the mode is switched to the second mode in a case where the movement amount of the zoom lens is equal to or greater than the threshold.
(4) The lens device according to any one of (1) to (3), in which
   the movement amount is a change amount from a position where the zoom lens is stopped.
(5) The lens device according to any one of (1) to (4), in which
   the control unit
   maintains the parameter after switching, until the zoom lens stops after the movement amount of the zoom lens becomes equal to or greater than the threshold.
(6) The lens device according to any one of (1) to (5), in which
   the control unit
   switches the parameter in a case where the movement amount of the zoom lens is equal to or greater than the threshold during autofocus for focusing on a predetermined subject.
(7) The lens device according to (3), in which
   the first mode is set during autofocus for focusing on a predetermined subject, and the second mode is set in a case where the movement amount of the zoom lens is equal to or greater than the threshold during the autofocus.
(8) The lens device according to any one of (1) to (7), in which
   the detection unit is capable of detecting an absolute position and a relative position of the zoom lens.
(9) The lens device according to any one of (1) to (8), in which
   the threshold is set to a maximum value of the movement amount of the zoom lens generated on the basis of mechanical tolerance of each unit holding the zoom lens.
(10) A control method including:
   maintaining a parameter for performing drive control of a focus lens in a case where a movement amount of a zoom lens based on a detection result of a detection unit that directly detects a position of the zoom lens is less than a predetermined threshold;
   switching the parameter in a case where the movement amount of the zoom lens is equal to or greater than the threshold; and
   performing drive control of the focus lens on the basis of the maintained or switched parameter.
(11) An imaging system including a lens device and an imaging device, in which
   the lens device includes:
   a zoom lens,
   a focus lens,
   a detection unit that directly detects a position of the zoom lens, and
   a control unit that maintains a parameter for performing drive control of the focus lens in a case where a movement amount of the zoom lens based on a detection result of the detection unit is less than a predetermined threshold, switches the parameter in a case where the movement amount of the zoom lens is equal to or greater than the threshold, and performs drive control of the focus lens on the basis of the maintained or switched parameter, and
   the imaging device includes
   an imaging element that captures a subject image incident via the lens device.

### REFERENCE SIGNS LIST

- 1: Imaging system
- 2: Imaging device
- 3: Interchangeable lens
- 12: Lens-side control unit
- 13: Zoom lens
- 16: Focus lens
- 24: Focus lens drive unit
- 55: Imaging element

## Claims

1. A lens device comprising:
a zoom lens;
a focus lens;
a detection unit that directly detects a position of the zoom lens; and
a control unit that maintains a parameter for performing drive control of the focus lens in a case where a movement amount of the zoom lens based on a detection result of the detection unit is less than a predetermined threshold, switches the parameter in a case where the movement amount of the zoom lens is equal to or greater than the threshold, and performs drive control of the focus lens on a basis of the maintained or switched parameter.

2. The lens device according to claim 1, wherein
a plurality of modes in which the parameter is defined is provided,
the mode is maintained in a case where the movement amount of the zoom lens is less than the threshold, and the mode is switched in a case where the movement amount of the zoom lens is equal to or greater than the threshold.

3. The lens device according to claim 2, wherein
a first mode in which a target position that does not depend on a control cycle is instructed, and a second mode in which a target position for each control cycle is instructed are provided,
the first mode is maintained in a case where the movement amount of the zoom lens is less than the threshold, and the mode is switched to the second mode in a case where the movement amount of the zoom lens is equal to or greater than the threshold.

4. The lens device according to claim 1, wherein
the movement amount is a change amount from a position where the zoom lens is stopped.

5. The lens device according to claim 1, wherein
the control unit
maintains the parameter after switching, until the zoom lens stops after the movement amount of the zoom lens becomes equal to or greater than the threshold.

6. The lens device according to claim 1, wherein
the control unit
switches the parameter in a case where the movement amount of the zoom lens is equal to or greater than the threshold during autofocus for focusing on a predetermined subject.

7. The lens device according to claim 3, wherein
the first mode is set during autofocus for focusing on a predetermined subject, and the second mode is set in a case where the movement amount of the zoom lens is equal to or greater than the threshold during the autofocus.

8. The lens device according to claim 1, wherein
the detection unit is capable of detecting an absolute position and a relative position of the zoom lens.

9. The lens device according to claim 1, wherein
the threshold is set to a maximum value of the movement amount of the zoom lens generated on a basis of mechanical tolerance of each unit holding the zoom lens.

10. A control method comprising:
maintaining a parameter for performing drive control of a focus lens in a case where a movement amount of a zoom lens based on a detection result of a detection unit that directly detects a position of the zoom lens is less than a predetermined threshold;
switching the parameter in a case where the movement amount of the zoom lens is equal to or greater than the threshold; and performing drive control of the focus lens on a basis of the maintained or switched parameter.

11. An imaging system comprising a lens device and an imaging device, wherein
the lens device includes:
a zoom lens,
a focus lens,
a detection unit that directly detects a position of the zoom lens, and
a control unit that maintains a parameter for performing drive control of the focus lens in a case where a movement amount of the zoom lens based on a detection result of the detection unit is less than a predetermined threshold, switches the parameter in a case where the movement amount of the zoom lens is equal to or greater than the threshold, and performs drive control of the focus lens on a basis of the maintained or switched parameter, and
the imaging device includes
an imaging element that captures a subject image incident via the lens device.
